# EUROPÄISCHE PATENTSCHRIFT

(11) **EP 0 711 461 B1**
(45) Veröffentlichungstag und Bekanntmachung des Hinweises auf die Patenterteilung: **15.10.1997**
(21) Anmeldenummer: 94922826.6
(22) Anmeldetag: 27.07.1994
(51) Int. Cl.: H01M 8/24, H01M 6/40, H01M 10/04

(54) **MEHRERE ZELLEN ENTHALTENDE BATTERIE IN FORM EINER STREIFENMEMBRAM**
BATTERY SHAPED AS A MEMBRANE STRIP CONTAINING SEVERAL CELLS
BATTERIE EN FORME DE MEMBRANE ALLONGEE CONTENANT PLUSIEURS CELLULES

(30) Priorität: 28.07.1993 DE 4325353; 03.09.1993 DE 4329819
(43) Veröffentlichungstag der Anmeldung: 15.05.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: LEDJEFF-Hey, Konstantin, D-79189 Bad Krozingen (DE); NOLTE, Roland, D-79211 Denzlingen (DE)
(74) Vertreter: Reitzle, Helmut, Dr.
(86) Internationale Anmeldenummer: DE9400888
(87) Internationale Veröffentlichungsnummer: WO9504382

(56) Entgegenhaltungen:
- EP-A- 0 198 483
- EP-A- 0 482 783
- WO-A-94/05051
- DE-A- 1 814 702
- FR-A- 1 452 564
- US-A- 4 287 272
- US-A- 5 035 965
- PATENT ABSTRACTS OF JAPAN vol. 014 no. 308 (E-0947) ,3.Juli 1990 & JP,A,02 100268 (BROTHER IND LTD) 12.April 1990,
- PATENT ABSTRACTS OF JAPAN vol. 007 no. 140 (E-182) ,18.Juni 1983 & JP,A,58 053162 (NIPPON DENSHIN DENWA KOSHA) 29.März 1983,
- PATENT ABSTRACTS OF JAPAN vol. 017 no. 334 (E-1387) ,24.Juni 1993 & JP,A,05 041221 (MITSUBISHI HEAVY IND LTD) 19.Februar 1993,

## Beschreibung

Die Erfindung betrifft den Aufbau einer Elektrochemischen Zelle mit einem Kernbereich, bestehend aus mehreren Einzelzellen, die in Form einer Streifenmembran ausgebildet sind.

Elektrochemische Zellen z. B. mit polymeren Festelektrolyten, bestehen vereinfachend aus zwei Elektroden, an denen die elektrochemischen Reaktionen ablaufen, sowie einem dazwischenliegenden Elektrolyten, der die Aufgabe des Ionentransports zwischen den Elektroden erfüllt und der aus einem ionenleitenden Polymer besteht.

Laufen an beiden Elektroden freiwillig elektrochemische Reaktionen ab (Oxidation an der Anode, Reduktion an der Kathode), so liefert die elektrochemische Zelle eine Spannung. Eine einzelne Zelle liefert nur eine relativ kleine Spannung im Bereich einiger Millivolt bis hin zu einigen Volt. Für viele praktische Anwendungen, wie bespielsweise für die Anwendung von Batterie-Brennstoffzellen im Traktionsbereich werden allerdings wesentlich höhere Spannungen benötigt.

Bisher werden deshalb eine Vielzahl solcher Zellen separat aufgebaut, hintereinander angeordnet und elektrisch in Reihe verschaltet, so daß sich die Spannungen der Einzelzellen addieren. Diese Art der Reihenschaltung ermöglicht zwar die Realisierung höherer Spannungen, ist jedoch mit erheblichen Nachteilen verbunden. So ist der konstruktionstechnische Aufwand einer derartigen Reihenschaltung sehr hoch. Man benötigt so z.B. für eine Wasserstoff-/Sauerstoff-Brennstoffzellenstack im allgemeinen für jede Einzelzelle eine bipolare Platte, einen WasserstoffGasverteilerring, eine mit Katalysator beschichtete Ionenaustauschermembran, einen Sauerstoff-Gasverteilerring, Dichtungsringe zum Abdichten dieser Komponenten sowie die Stromverteilerstrukturen. Dies sind insgesamt 10 Komponenten je Einzelzelle. Soll nun beispielsweise eine Stackausgangsspannung von 70 V realisiert werden, so sind bei einer Einzelzellenspannung von 0,7 V immerhin 100 Einzelzellen nötig, d.h. 1000 Komponenten müssen zusammengefügt werden, wobei 400 Dichtungsringe fixiert werden müssen.

Weiter nachteilig ist aufgrund der Reihenschaltung, daß bei Ausfall einer einzigen Zelle im Brennstoffzellenstack der gesamte Stack zusammenbricht. Eine redundante Bauweise für obiges Beispiel, d.h. die Parallelschaltung mehrerer 70 V Stacks würde jedoch den Konstruktionsaufwand in nicht mehr tragbare Bereiche treiben.

Ausgehend hiervon ist es daher die Aufgabe der vorliegenden Erfindung, eine elektrochemischen Zelle vorzuschlagen, die gegenüber dem Stand der Technik einen einfacheren und kostengünstigeren Aufbau besitzt und eine sichere Betriebsweise erlaubt.

Die Aufgabe wird durch die in Patentanspruch 1 angegebenen Merkmale gelöst. Die Unteransprüche geben vorteilhafte Weiterbildungen an.

Die Erfindung schlägt nun erstmals vor, daß der Kernbereich einer elektrochemischen Zelle durch sog. Streifenmembrane gebildet wird.

Unter dem Kernbereich der elektrochemischen Zelle wird die Einheit verstanden, an der die elektrochemischen Reaktionen ablaufen. Erfindungsgemäß besteht dabei der Kernbereich aus mindestens einer flächigen Streifenmembran, die mindestens 2, höchstens 10 000 in Reihe verschaltete Einzelzellen aufweist.

Die Verschaltung der Einzelzellen kann dabei entweder über elektronisch leitfähige Bezirke (Anspruch 2) oder durch eine treppenförmige Anordnung (Anspruch 3) der Einzelzellen erfolgen.

Die bevorzugte Ausführungsform nach Anspruch 2 schlägt vor, die Verschaltung über flächige elektronisch leitfähige Bezirke vorzunehmen.

Die Streifenmembran selbst besteht in diesem Fall aus flächig nebeneinander angeordneten Bezirken, die unterschiedliche Leitfähigkeiten aufweisen.

Ein Bezirk wird dabei durch die Einzelzelle selbst gebildet. Die Einzelzelle besteht dabei, um die Ionenleitfähigkeit zu gewährleisten, aus einem ionenleitfähigen Material. Dazu werden polymere Festelektrolyten in Form von Membranen eingesetzt. Da entweder Kationen oder Anionen transportiert werden müssen, muß die Membrane entweder für Kationen oder für Anionen permeabel sein. Die Ionenleitfähigkeit ist dabei in wässriger Umgebung für kationenleitende Polymere im allgemeinen dann gegeben, wenn im Polymer fest verankerte, d.h. im allgemeinen durch chemische Bindung verankerte Carbonsäuregruppen und/oder Sulfonsäuregruppen und/oder Phosphonsäuregruppen vorhanden sind. Für anionenleitende Polymer ist die Ionenleitfähigkeit insbesondere dann gegeben, wenn das Polymer Aminogruppen, quartäre Ammoniumgruppen oder Pyridiniumgruppen enthält. Die Fähigkeit der Ionenleitfähigkeit wird bei den bisher beschriebenen Möglichkeiten dadurch erzeugt, daß in der Membran fest verankerte Ionen existieren oder bei Quellung in Wasser erzeugt werden.

Beispiele für kationenleitende Polymere dieses Typs sind sulfonierte Polysulfone, Polyethersulfone oder auch Polyetherketone.

Auch in nicht-wäßriger Umgebung können Polymere eine Ionenleitfähigkeit aufweisen. Hierzu müssen die Polymere Gruppen enthalten, die anorganische Salze lösen können. Diese Fähigkeit weisen beispielsweise Polymere wie Poly(ethylenoxid) auf, die aufgrund des Vorhandenseins von solvatisierenden Ethylenoxideinheiten anorganische Salze, wie z.B. Lithiumperchlorat lösen können und dementsprechend eine Leitfähigkeit für Lithiumionen aufweisen.

Die Dicke der Membran kann dabei im Bereich zwischen 0,5 µm und 1 mm, bevorzugt im Bereich von 10 µm bis 200 µm liegen. Die Flächen der Membran für die Einzelzelle richten sich dabei nach der geforderten Leistung des Stacks. Die Flächen können im Bereich von 1mm² bis 1 000 000 mm² liegen, bevorzugt im Bereich von 100 bis 10 000 mm².

Um die Funktion als Einzelzelle zu ermöglichen, sind nun die vorstehend beschriebenen Membranen beidseitig mit Elektrodenmaterial beschichtet. Da an den Elektroden die elektrochemischen Umsetzungen der Zelle erfolgen, können die Elektroden entweder selbst aus dem Material bestehen, das elektrochemisch umgesetzt wird, oder aus Material, welches die elektrochemische Umsetzung katalysiert. Das Material muß elektronisch leitfähig sein und besteht insbesondere aus Metallen, Metalloxiden, Mischoxiden, Legierungen, Kohlenstoff, elektronisch leitfähigen Polymeren oder Mischungen hieraus.

Die Materialien können Zusatzstoffe enthalten, die der Einstellung von Hydrophilie, Hydrophobie dienen. Damit können die Elektrodenschichten beispielsweise mit wasserabweisenden Eigenschaften ausgestattet werden. Weiter sind Zusatzstoffe möglich, die die Einstellung einer gewissen Porosität erlauben. Dies ist insbesondere dann von Bedeutung, wenn gasförmige Stoffe katalytisch an den Elektroden umgesetzt werden, wobei ein Dreiphasenkontakt zwischen Gas, Katalysator und ionenleitfähigem Bezirk erforderlich ist. Weiter können sog. Binder zugemischt werden, die die stabile und funktionsfähige Anbindung der Elektrode an den ionenleitenden Bezirk erleichtert.

Diese so aufgebaute Einzelzelle wird nun mit Hilfe von flächigen elektronisch leitfähigen Bezirken mit anderen Einzelzellen elektrisch in Reihe geschaltet.

Die elektronenleitenden Bezirke haben die Aufgabe, eine elektronische Leitfähigkeit zwischen jeweils einer Elektrodenfläche einer Einzelzelle und der auf der anderen Seite der Membran angeordneten Elektrodenfläche der nächsten Einzelzelle herzustellen.

Für die elektronisch leitfähigen Bezirke werden Materialien verwendet, die anstelle der Ionenleitfähigkeit der Einzelzelle nun eine Elektronenleitfähigkeit aufweisen. Die Funktion der Streifenmembran ist dabei unabhängig von bestimmten Polymermaterialien für die elektronenleitenden Bezirke, so lange die Fähigkeit der Materialien zur Elektronenleitfähigkeit gegeben ist. Die Elektronenleitfähigkeit bei polymeren Materialien kann erreicht werden, indem Polymere eingesetzt werden, die von ihrem molekularen Aufbau her befähigt sind, Elektronenleitfähigkeit zu erreichen, wie dies z.B. bei Polyacetylen oder Polythiophenen der Fall ist.

Die Elektronenleitfähigkeit kann auch erzeugt werden, indem ein gewisser Anteil leitfähiger Substanzen zu einem nichtleitenden Polymer zugemischt wird. Bei den leitfähigen Substanzen handelt es sich insbesondere um Leitfähigkeitsruß, Graphit, Kohlenstoff-Fasern, Partikel oder Fasern von elektronisch selbst leitfähigen Polymeren, Metallteilchen, -flocken oder -fasern oder metallisierte Trägermaterialien.

Die Polymere können Zusatzstoffe zur Veränderung des Quellverhaltens in Wasser enthalten. Dies ist insbesondere dann von Bedeutung, wenn die Membran in wäßrige Umgebung eingesetzt wird. Hier quellen mit geladenen Gruppen versehene, ionisch leitfähige Bezirke der Membran, was sich in einer Änderung der geometrischen Maße bemerkbar macht. Andere Bezirke, die nicht mit geladenen chemischen Gruppen versehen sind, quellen dagegen kaum, so daß sich mechanische Spannungen an den Grenzflächen beider Schichten ergeben. Um dies zu vermeiden, kann den nicht mit geladenen Gruppen versehenen Bezirken ein Zusatzstoff beigemengt werden, der das Quellungsverhalten beider anpaßt.

Erfindungswesentlich ist nun, daß die vorstehend beschriebenen Einzelzellen über die elektronisch leitfähigen Bezirke in Reihe geschaltet werden. Dazu wird entweder die untere Elektrodenfläche einer Membran einer Einzelzelle über die elektronisch leitfähigen Bezirke mit der folgenden Einzelzelle, und zwar hier mit der oberen Elektrodenfläche verbunden. Umgekehrt ist es natürlich genauso möglich, daß die obere Elektrodenfläche einer ersten Einzelzelle über den elektronisch leitfähigen Bezirk mit der unteren Elektrodenfläche der nächsten Einzelzelle verbunden wird.

Bei einem derartigen Aufbau grenzen die elektrodenbeschichteten ionisch leitfähigen Bezirke (die einer Einzelzelle entsprechen) direkt an die elektronisch leitfähigen Bezirke. Um zu vermeiden, daß an dieser Grenze die beschichtete Ober- und Unterseite des ionisch leitfähigen Bezirks durch die elektronisch leitfähigen Bezirke kurzgeschlossen werden, was den Ausfall der Einzelzelle bedeutet, dürfen die Elektrodenbeschichtungen nicht bis an den Rand des ionisch leitfähigen Materials aufgebracht sein. Es darf jeweils nur die obere oder die untere Elektrodenbeschichtung einer Einzelzelle mit dem benachbarten elektrisch leitfähigen Bezirk elektrisch leitfähig verbunden sein. Dies wird erreicht, in dem auf der einen Seite des ionenleitenden Bezirks der Bereich zwischen Elektrodenbeschichtung und elektronisch leitfähigem Bezirk mit elektronisch leitfähigen Strukturen beschichtet wird, so daß eine wie oben beschrieben definierte elektrische Verschaltung der einzelnen Membranbezirke möglich wird. Das hierzu verwendete Material besteht entweder aus den unter Materialien für die elektronisch leitfähigen Bezirke oder aus dem unter den Materialien für die Elektrodenbeschichtung der Membran beschriebenen Materialien.

Dadurch wird nun eine In-Reihe-Schaltung der einzelnen Einzelzellen über die elektronisch leitfähigen Bezirke erreicht. Die Abmessungen des elektronisch leitfähigen Bezirks entsprechen dabei in Dicke und Breite in etwa denen der Einzelzelle, so daß insgesamt eine flächige Streifenmembran entsteht, die aus periodisch wiederholten Bezirken, nämlich einerseits aus der Einzelzelle und andererseits aus den elektronisch leitfähigen Bezirken besteht.

Nach einer bevorzugten Ausführungsform wird nun vorgeschlagen, daß zwischen den Einzelzellen und den elektronisch leitfähigen Bezirken Isolationsbezirke angeordnet sind. Die Abmessungen (Dicke, Breite) entsprechen dabei in etwa denen der Einzelzelle bzw. des leitenden Bezirks.

Diese Bezirke dienen zur elektrischen Isolation zwischen den unterschiedlich leitfähigen Bezirken. Sie bestehen deshalb aus sowohl ionisch als auch elektronisch nicht leitfähigem Polymermaterial. Die Funktion der Streifenmembran ist dabei unabhängig von bestimmten Polymermaterialien für die nichtleitenden Bezirke, so lange die Materialien weder ionen- noch elektronenleitend sind. Es kommen deshalb solche Polymermaterialien zum Einsatz, die weder unter die Kategorie "Materialien für die ionenleitfähigen Bezirke der Membraneinheiten" noch unter die Kategorie "Materialien für die elektronisch leitfähigen Bezirke" fallen.

Beim Aufbau der Membran mit Isolationsbezirken können im Gegensatz zum Aufbau ohne Isolationsbezirke die Elektrodenbeschichtungen die gleiche Fläche besitzen wie die ionenleitenden Membranen.

Zur In-Reihe-Schaltung bei dieser Ausgestaltung der Erfindung muß dann gewährleistet sein, daß eine Verbindung über die elektronisch leitfähigen Bezirke mit der unteren bzw. oberen Elektrodenfläche der Einzelzellen gewährleistet ist. Dies wird dadurch ermöglicht, daß die Streifenmembran in bestimmten Bereichen, und zwar auf der oberen bzw. unteren Membranfläche des Isolationsbezirks mit elektronisch leitfähigen Strukturen beschichtet wird, so daß eine definierte elektrische Verschaltung der einzelnen Membranbezirke möglich wird, und zwar in der Weise, daß jeweils eine Elektrodenfläche einer Einzelzelle mit der auf der anderen Seite der Membran angeordneten Elektrodenfläche der nächsten Einzelzelle verbunden ist. Das hierzu verwendete Material besteht entweder aus den unter Materialien für die elektronisch leitfähigen Bezirke oder aus dem unter den Materialien für die Elektrodenbeschichtung der Membran beschriebenen Materialien.

Eine Streifenmembran, die nach der bevorzugten Ausführungsform noch zusätzlich Isolationsbezirke aufweist, ist demnach aus sich periodisch wiederholenden Bezirken der Einzelzelle, dem Isolationsbezirk und dem elektronisch leitenden Bezirk aufgebaut. Die Streifenmembran besteht bevorzugt aus 2 bis 10 000 Einzelzellen.

Bei der Ausführungsform nach Anspruch 3 wird die In-Reihe-Schaltung durch eine treppenförmige Anordnung erreicht, und zwar in der Art, daß die eine Elektrodenfläche einer Einzelzelle gleichzeitig die Aufgabe des elektronisch leitfähigen Bezirks übernimmt. Ein separater elektronisch leitfähiger Bereich entfällt in diesem Fall ebenso wie Isolationsbezirke. Um eine In-Reihe-Schaltung zweier Einzelzellen in diesem Fall zu gewährleisten, überlappen die Zellen derart, daß der Randbereich einer Elektrodenfläche der ersten Einzelzelle direkt mit dem Randbereich der Elektrodenfläche auf der anderen Membranseite der nächsten Einzelzelle elektrisch leitend verbunden ist. Es entsteht in diesem Fall eine Streifenmembran, bei der die einzelnen Einzelzellen treppenförmig überlappend aneinandergereiht sind. Der Aufbau der Einzelzelle entspricht der vorstehend beschriebenen Art.

Erfindungsgemäß wird weiter vorgeschlagen, daß die elektrochemische Zelle eine wie vorstehend beschriebene Streifenmembran als Kernbereich aufweist.

Nach einer bevorzugten Ausführungsform wird vorgeschlagen, den Kernbereich nun auf verschiedene Weise aufzubauen.

Nach einer ersten Variante ist es nun möglich, eine wie vorstehend beschriebene Streifenmembran einzusetzen. Diese Streifenmembran kann z.B. 2 bis 10 000 hintereinander geschaltete Einzelzellen, in der vorstehend beschriebenen Weise, enthalten. Diese "eindimensionale Streifenmembran" kann noch an allen 4 Seiten Randstreifen aus elektronisch nicht leitfähigem Material besitzen.

Eine Variante (Anspruch 5) sieht nun vor, daß mehrere (bis zu 50) eindimensionale Streifenmembranen nebeneinander angeordnet werden, wobei diese nebeneinander angeordneten eindimensionalen Streifenmembranen in Reihe geschaltet werden. Dadurch entstehen sogenannte "zweidimensionale Streifenmembranen". Die einzelnen nebeneinander angeordneten eindimensionalen Streifen-membranen können durch Trennbezirke aus elektronisch nicht leitfähigem Material miteinander verbunden werden.

Eine zweite Ausführungsform (Anspruch 6) sieht nun vor, daß 2 oder mehrere (bis zu 50) eindimensionale Streifenmembranen nebeneinander angeordnet werden, wobei diese nebeneinander angeordnete eindimensionale Streifenmembranen parallel geschaltet werden. Dadurch entstehen sog. "zweidimensionale Streifenmembranen". Die einzelnen, nebeneinander angeordneten eindimensionalen Streifenmembranen können durch Trennbezirke aus elektronisch nicht leitfähigem Material miteinander verbunden werden. Damit können unterschiedliche Spannungen und Redundanzen erzeugt werden.

Erfindungsgemäß bildet nun entweder eine eindimensionale Streifenmembran oder eine zweidimensionale Streifenmembran mit einer entsprechenden Peripherie den Kernbereich der elektrochemischen Zelle.

Grundsätzlich ist die erfindungsgemäße Streifenmembran in allen elektrochemischen Zellen anwendbar. Ein Überblick hierüber ist aus dem "Handbook of Batteries and Fuel Cells, David Linden (Editor in Chief), McGraw-Hill Book Company, 1984" zu entnehmen. Im folgenden (Tabelle) sind einige bevorzugte elektrochemische Zellen, charakterisiert durch ihre Elektrodenauswahl, aufgeführt. Besonders geeignet ist die erfindungsgemäße Streifenmembran für Brennstoffzellen.

Im Folgenden sind in Form einer Tabelle die bevorzugten Zelltypen aufgeführt:

Die mit Elektrodenmaterial 1 bezeichnete Gruppe beschreibt das Material, mit dem die ionenleitenden Bezirke der Streifenmembran auf der einen Seite beschichtet sind. Wenn das Elektrodenmaterial nicht selbst die elektrochemisch aktive Komponente darstellt, ist letztere in Klammern [] zusätzlich angegeben.

Die mit Elektrodenmaterial 2 bezeichnete Gruppe beschreibt das Material, mit dem die ionenleitenden Bezirke der Streifenmembran auf der anderen Seite beschichtet sind. Wenn das Elektrodenmaterial nicht selbst die elektrochemisch aktive Komponente darstellt, ist letztere in Klammern [] zusätzlich angegeben.

Der Elektrolyt beschreibt das Material, aus dem der ionenleitende Bezirk der Streifenmembran besteht.

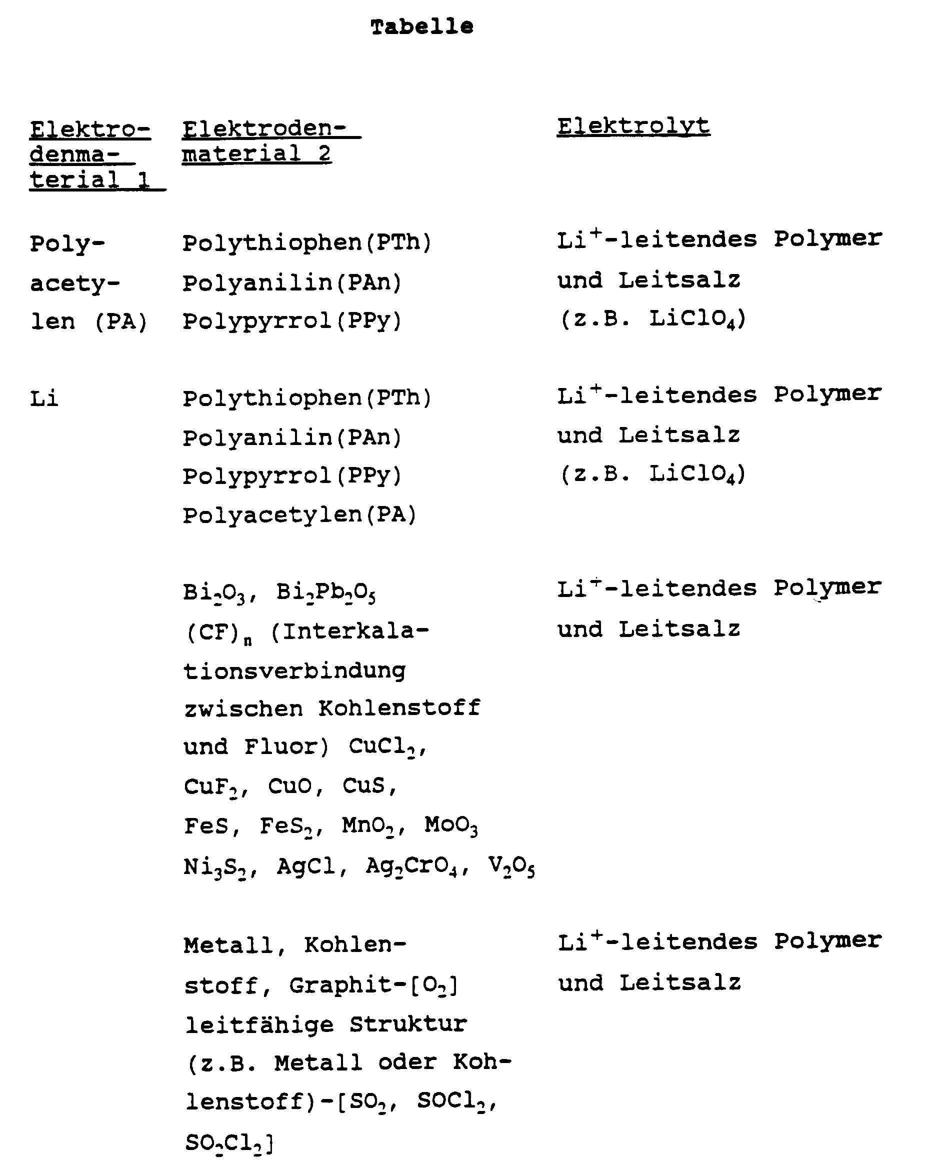

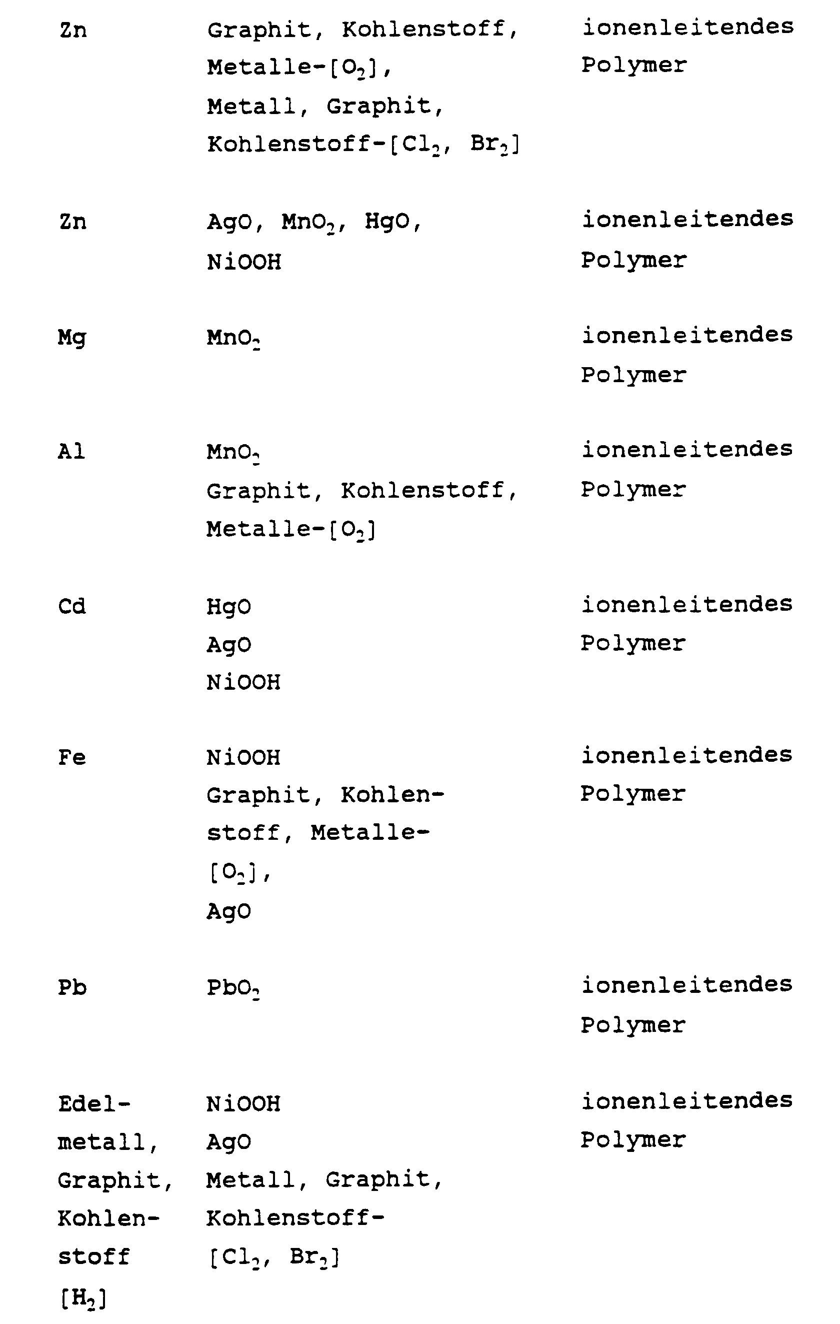

Erfindungsgemäß muß der Kernbereich jeweils mit einer geeigneten Peripherie in den vorstehend beschriebenen Zellen angeordnet sein.

Für den Fall eines Brennstoffzellenstack muß dabei der Kernbereich so in einem Gehäuse angeordnet sein, daß zwei gegeneinander gasdicht verschlossene Räume in dem Gehäuse entstehen. Das Gehäuse muß dann noch entsprechende Zuführungen für ein erstes Gas, z.B. Wasserstoff auf der einen Seite in den ersten Raum des Gehäuses und Zuführungen für ein zweites Gas, z.B. Sauerstoff in den zweiten Raum auf die andere Seite des Kernbereichs aufweisen.

Mit diesem Anordnungsprinzip gelingt es nun, den aufwendigen dreidimensionalen Aufbau herkömmlicher Reihenschaltungen in eine quasi zweidimensionale Membran (Streifenmembran) zu integrieren, für die nur noch eine Peripherie nötig ist. Werden also, wie im Eingangsbeispiel, ein 70 V Stack benötigt, so sind hierzu 100 Einzelzellen in eine Membran integriert, so daß nun- mehr nur noch 2 Endplatten, 2 Gasverteilerringe und 4 Dichtungen nötig sind, um einen funktionsfähigen Brennstoffzellenstack zu realisieren. Im Gegensatz dazu sind bei den Brennstoffzellenstacks des Standes der Technik 100 bipolare Platten, 200 Gasverteilerringe und 400 Dichtungen nötig. Die Erfindung ermöglicht somit einen entscheidend kostengünstigeren und einfacheren Aufbau eines Brennstoffzellenstacks.

Wird nun beispielsweise auf der einen Membranseite Wasserstoff und auf der anderen Membranseite Sauerstoff angeboten und bestehen die Elektroden beispielsweise aus einer porösen Platinschicht, so arbeitet jede Streifenmembran als Wasserstoff/Sauerstoff/Brennstoffzelle. Durch die Reihenschaltung der Einzelzellen addieren sich nun die Einzelspannungen jeder Streifenmembran, so daß mit einer einzigen Membranfläche eine Brennstoffzelle mit hoher Ausgangsspannung realisiert werden kann. Sind beispielsweise die Streifenmembranen wie vorstehend beschrieben, elektrisch parallel verschaltet und arbeitet die Membran im Wasserstoff/Sauerstoff/Brennstoffzellenbetrieb, so wirkt sich nun ein Ausfall einer Streifen-membran auf die Gesamtspannung fast nicht aus, da nur die Streifenmembran keine Spannung mehr liefert, in der sich die defekte Membraneinheit befindet. Durch die Parallelschaltung der Gruppen kann die Gesamtspannung durch die anderen Gruppen weiterhin erzeugt werden. Im Gegensatz dazu bricht bei einer einfachen Reihenschaltung von elektrochemischen Zellen beim Defekt einer einzigen Zelle die Gesamtspannung zusammen, da der Stromkreis unterbrochen ist.

Weitere Einzelheiten, Merkmale und Vorteile der vorliegenden Erfindung ergeben sich aus der nachfolgenden Beschreibung des Herstellungsverfahrens der Streifenmembran, sowie anhand der Figuren 1 bis 6, die die Erfindung anhand des Beispiels "Brennstoffzellenstack" näherer läutert.

Figur 1 zeigt dabei den Aufbau eines herkömmlichen Brennstoffzellenstacks.

Figur 2a zeigt in der Aufsicht die sich periodisch wiederholenden Bezirke einer Streifenmembran in der bevorzugten Ausführungsform mit einem Isolationsbezirk.

Figur 2b zeigt den Querschnitt einer Membraneinheit nach Fig. 2a.

Figur 3 zeigt die elektrische Verschaltung der Streifenmembran.

Figur 4 zeigt den Aufbau und die elektrische Verschaltung einer Streifenmembran in der Ausführungsform, in der die Elektrodenfläche gleichzeitig die Aufgabe der elektronisch leitfähigen Bezirke übernimmt.

Figur 5 zeigt schematisch eine eindimensionale Streifenmembran.

Figur 6 zeigt eine zweidimensionale Streifenmembran.

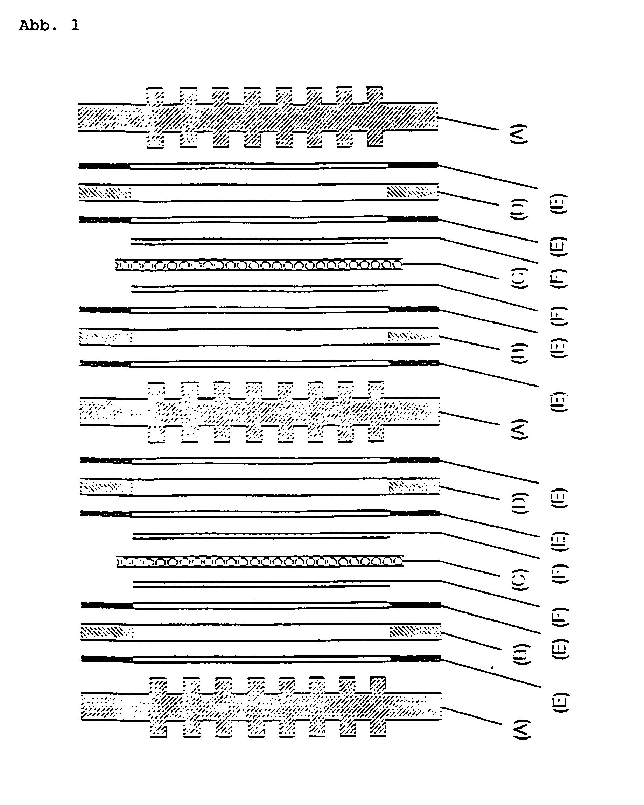

Figur 1 macht deutlich, daß der konstruktive Aufwand eines Brennstoffzellenstacks des Standes der Technik sehr hoch ist. Wie Figur 1 verdeutlicht, benötigt jede Einzelzelle eines Wasserstoff-/Sauerstoff-Brennstoffzellenstacks im allgemeinen eine bipolare Platte A, einen Wasserstoffgasverteilerring B, eine mit Katalysator beschichtete Ionenaustauschermembran C, einen Sauerstoffgasverteilerring D, Dichtungsringe E zum Abdichten dieser Komponenten, sowie die Stromverteilerstrukturen F.

Dies sind insgesamt 10 Komponenten je Einzelzelle. Soll beispielsweise eine Stackausgangsspannung von 70 V realisiert werden, so werden bei einer Einzelzellenspannung von 0,7 V immerhin 100 Einzelzellen benötigt, d.h. 1000 Komponenten müssen zusammengefügt werden und 400 Dichtringe fixiert werden.

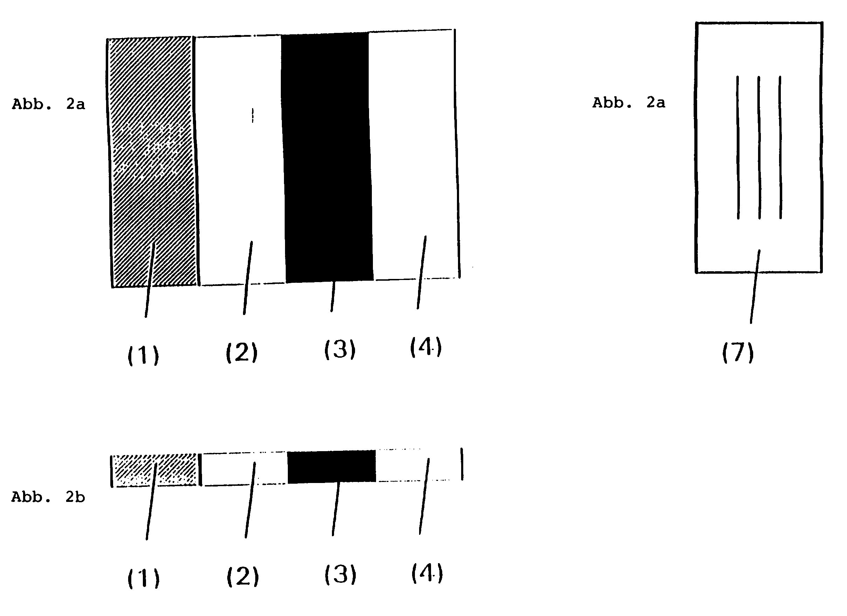

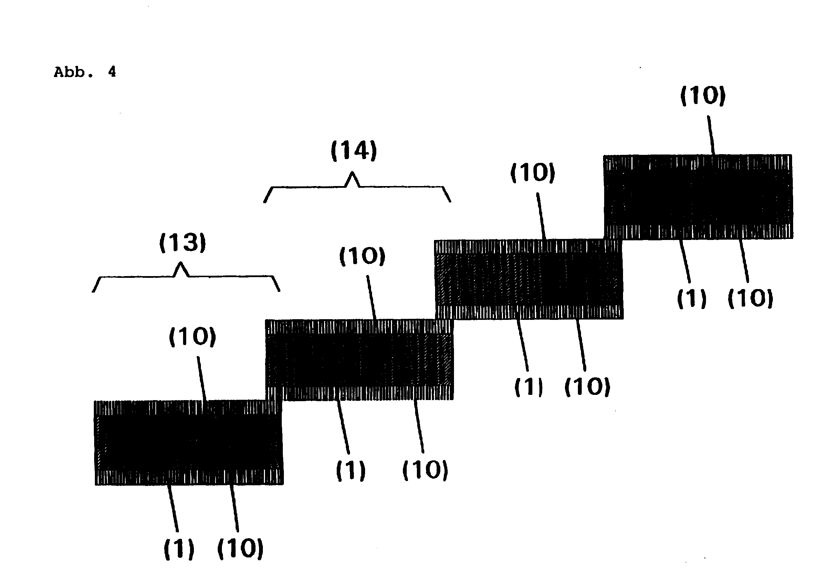

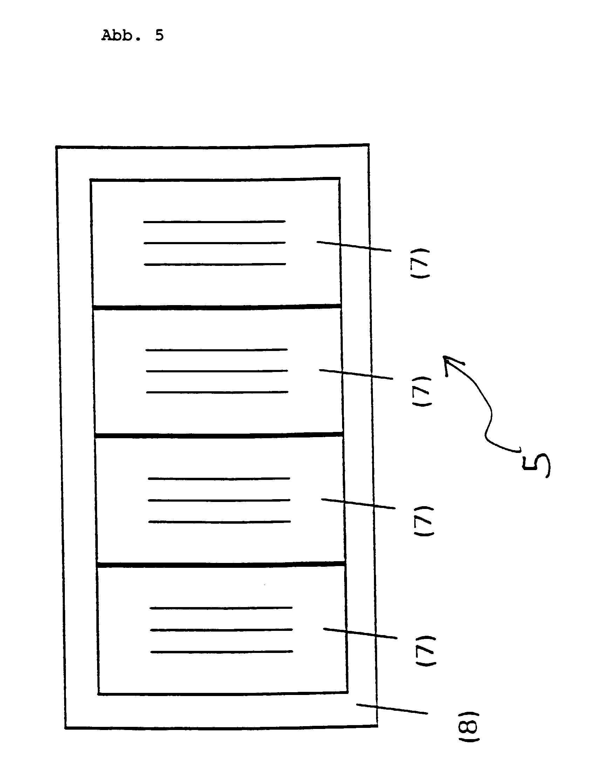

Figur 2a zeigt nun die hintereinander angeordneten Bezirke einer Streifenmembran mit Isolationsbezirken 2, 4. Der erste Bezirk 1 ist dabei rein ionisch leitfähig und zeigt die Membranfläche der Einzelzelle. Der zweite Bezirk 2 ist sowohl ionisch als auch elektronisch nicht leitend und stellt den Isolationsbezirk dar. Der dritte Bezirk 3 ist rein elektronisch leitfähig und der vierte Bezirk 4 ist wiederum sowohl ionisch als auch elektronisch nicht leitend und stellt wiederum einen Isolationsbezirk dar. Diese Einheiten wiederholen sich nun periodisch in einer Streifenmembran. Die in Figur 2a wiedergegebene Reihenfolge der Bezirke 1 bis 4 wird in den Abbildungen 4 und 5 durch das Rechteck 7 symbolisiert. Die Einheiten 1-4 bilden eine Membraneinheit und stellen die Grundeinheit der fertigen Streifenmembran dar (zur besseren Übersicht ohne Verschaltung abgebildet).

Figur 2b zeigt einen Querschnitt durch eine derartige Membran. Die Streifenmembran besitzt dabei eine Dikke, die im Bereich zwischen 0,5 µm und 1 mm, bevorzugt im Bereich von 10 µm bis 200 µm variiert. Alle Flächen, aus denen die Streifenmembran aufgebaut ist, haben demzufolge ebenfalls Dicken in dieser Größenordnung. Die Flächen der jeweiligen Bezirke richten sich dabei nach den Anforderungen, d.h. nach der Leistung, die an die Streifenmembran gestellt werden. Die Flächen jeden einzelnen Bezirkes können dabei 1mm² bis 1 000 000 mm² betragen.

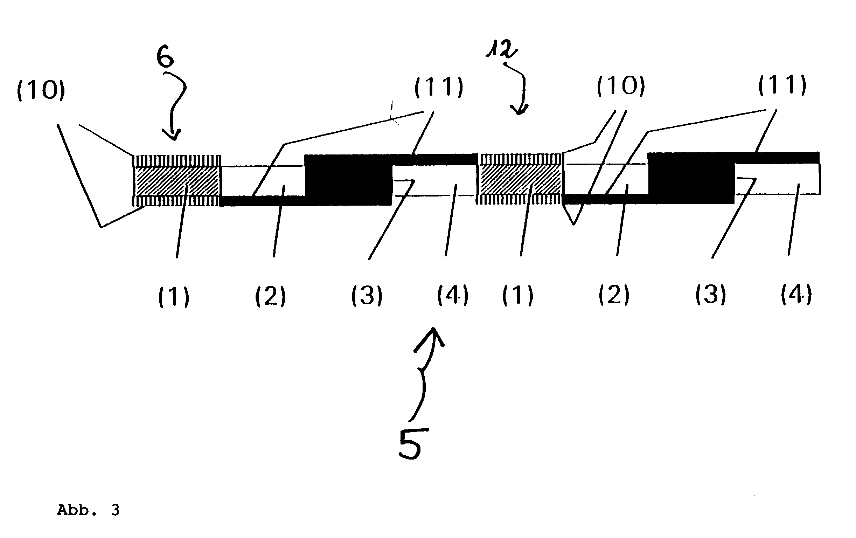

Figur 3 zeigt nun die In-Reihe-Verschaltung einer Streifenmembran, wie sie in Figur 2 beschrieben wird. Erfindungswesentlich dabei ist, daß die untere Elektrodenfläche 10 einer ersten Einzelzelle 6 über den elektronisch leitfähigen Bezirk 3 mit der oberen Elektrodenfläche (10) einer zweiten Einzelzelle 12 in Reihe verschaltet ist. Da in der Ausführungsform nach Figur 3 Isolationsbezirke 2, 4 vorgesehen sind, muß die In-Reihe-Schaltung durch eine zusätzliche Beschichtung 11 erfolgen. Die periodische Abfolge derartiger in Fig. 3 im Querschnitt abgebildeter Einheiten bildet dann eine Streifenmembran.

Das Herstellen der Streifenmembran 5 kann dabei aus separaten, fertigen Einzelflächen erfolgen. In diesem Fall werden sämtliche Einzelflächen, die zum Aufbau der Streifenmembran benötigt werden (d.h. die Einzelbezirke des jeweils verwendeten Typs der Membran evtl. Trennbezirke und Randstreifen) vor der Herstellung der eigentlichen Membran in der benötigen Größe separat hergestellt und nachträglich zur gesamten Streifen-Membran 5 verbunden. Verwendet werden Folien der entsprechenden Materialien (Polymerfolien, Folien modifizierter Polymere, etc.) aus denen Stücke der benötigten Geometrie herausgeschnitten werden. Die ionisch leitfähigen Bezirke 1 der Membran können bereits fertig mit Elektrodenmaterial 10 beschichtet sein, oder die Beschichtung mit Elektrodenmaterial 10 erfolgt nach dem Verbinden der Einzelstücke. Die Stücke werden in der Geometrie des herzustellenden Streifen-Membrantyps angeordnet und miteinander dauerhaft und gasdicht verbunden. Das Verbinden der Stücke erfolgt dabei durch herkömmliche Klebemethoden, wie z.B. Kleben durch Lösungsmittel-, Dispersions-, Schmelz-, Kontakt- oder Reaktionsklebstoffe, oder durch thermische Methoden wie beispielsweise Verschweißung, so daß als Resultat eine aus einem Stück bestehende Fläche resultiert, die keinen direkten Gaskontakt zwischen Membranoberseite und Membranunterseite mehr erlaubt. Unterstützend kann das Verbinden der Einzelflächen durch zusätzliches Zusammenpressen unter Druck erfolgen.

Eine weitere Möglichkeit zur Membranherstellung besteht darin, polymere Materialien zu verwenden, die in den fließfähigen Zustand überführt werden können, also beispielsweise schmelzbar oder in bestimmten Lösungsmitteln löslich sind. Sämtliche Bezirke der Membran werden dadurch erzeugt, daß die fließfähigen Materialien mit geeigneten Dosier- und Verteilungseinrichtungen auf ein Substrat (wie z.B. eine Glasplatte) aufgebracht werden und durch Abkühlen der Schmelze bzw. Verdunsten des Lösungsmittels Folien dieser Materialien erzeugt werden.

Dieses Aufbringen der verschiedenen Bezirke kann nacheinander erfolgen, d.h. das erste Material wird in fließfähiger Form auf das Substrat aufgebracht und abgekühlt (Schmelze) bzw. getrocknet (Lösung), so daß eine Folie auf dem Substrat entsteht. Anschließend wird das nächste Material des angrenzenden Bezirks in fließfähiger Form aufgebracht und die Folie erzeugt. Bei der Wahl geeigneter, zueinander passender Materialien ist es möglich, daß durch die jeweilige Zugabe des fließfähigen Materials die Randbereiche des benachbarten, bereits hergestellten Bezirks im Falle gelöster Materialien mit angelöst und im Falle geschmolzener Materialien in den plastischen Zustand (Polymere) versetzt werden, so daß gleichzeitig mit der Zugabe des jeweiligen fließfähigen Materials ein Verbund mit dem benachbarten Bezirk zustandekommt. Abschließend wird die Membran vom Substrat abgelöst. Ein nachträgliches Verkleben/Verschweißen der Bezirke, auch unter Druck, ist möglich.

Eine weitere Möglichkeit sieht vor, das Aufbringen der verschiedenen Bezirke gleichzeitig zu realisieren. Hierzu werden die in den fließfähigen Zustand gebrachten Materialien über geeignete Dosier- und Verteilungseinrichtungen gleichzeitig und nebeneinander so auf das Substrat gegeben, daß sich die verschiedenen, noch im fließfähigen Zustand befindlichen Materialien in den Randbereichen auf dem Substrat vermischen. Eine anschließende Trocknung (bei gelösten Stoffen) bzw. ein anschließendes Abkühlen (bei Schmelzen) fixiert die bereits miteinander verbundenen Materialien. Abschließend wird die Membran vom Substrat abgelöst. Ein zusätzliches nachträgliches Verkleben/Verschweißen der Bezirke ist möglich. Das gleichzeitige Aufbringen der verschiedenen Materialien ist insbesondere für kontinuierliche Herstellverfahren von Streifen-Membranen geeignet.

Die Elektrodenbeschichtung 10 wird auf die ionisch leitfähigen Bezirke 1 der Membraneinheiten aufgebracht. Die prinzipielle Funktion der Streifen-Membran 5 ist von der Art der Elektrodenaufbringung unabhängig; die Technik der Aufbringung muß allerdings folgendes gewährleisten:
- Die Elektrode muß so auf die Membran aufgebracht sein, daß ein Stoffaustausch der zu transportierenden Ionen zwischen den ionisch leitfähigen Membranbezirken und den Elektroden möglich ist.
- Das Elektrodenmaterial muß eine elektronische Querleitfähigkeit aufweisen, um eine Stromabnahme zu ermöglichen.

Beispielsweise ist die Aufbringung des Elektrodenmaterials 10 mit oder ohne Zusatzstoffe durch Preßverfahren möglich. Hierbei ist das Elektrodenmaterial das Ausgangsmaterial, welches beispielsweise als Pulver vorliegen kann und mit der Membran verpreßt wird. Eine Möglichkeit für ein solches Verfahren ist in Appleby, Yeager, Energy (Oxford), 11 (1986), 137 enthalten. Verwendet man thermoplastische Polymere für die ionisch leitfähigen Bezirke 1 der Membran, so läßt sich das Elektrodenmaterial 10 durch Pressen bei erhöhten Temperaturen besonders gut mit den Bezirken verbinden, da diese durch das Aufheizen in den plastischen Zustand versetzt werden können. Verwendet man lösliche Polymere für die ionisch leitfähigen Bezirke 1, so erreicht man durch ein oberflächliches Anlösen der Bezirke mit geeigneten Lösungsmitteln vor dem Pressen ebenfalls eine intensive Elektrodenanbindung. Das Elektrodenmaterial 10 kann bei diesen Verfahren z.B. als Pulver vorliegen, in Form einer Folie vorliegen (z.B. auf einen Träger aufgebracht sein oder polymergebunden), oder als fester Materialblock.

Eine andere Möglichkeit besteht darin, das Elektrodenmaterial 10 als Suspension mit oder ohne Zusatzstoffe im fließfähigen Zustand auf die Membran zu geben und durch Trocknung die Elektrodenschicht zu erzeugen. Dabei kann bei der Verwendung löslicher Materialien für die ionischen Bereiche der Membraneinheiten durch die Suspension ein Anlösen der Membranoberfläche erfolgen, so daß nach der Trocknung der gewünschte innige Verbund zwischen ionisch leitfähigem Material und Elektrode entsteht. Ebenfalls möglich ist es, die Elektrode durch Dünnschichtverfahren, (wie z.B. Sputtern oder Plasmaprozesse) evtl. mit geeigneten Masken auf der Membran abzuscheiden, wobei sich eine Nachbehandlung der Schichten zur Erreichung einer porösen Struktur anschließen kann.

Zur Verbesserung der Querleitfähigkeit der Elektrodenschicht ist es möglich, daß auf die in die Membran integrierten Katalysatorschichten elektrisch leitfähige Strukturen zur Stromsammlung (z.B. Metallnetze) aufgebracht werden, indem sie mit der Membran verklebt, verpreßt oder verschweißt werden.

Für die bevorzugte Ausführungsform mit den Isolationsbezirken 2, 4 müssen elektronisch leitfähige Verbindungen 11 aufgebracht werden.

Sie müssen dabei die elektrische Verbindung von elektronisch leitfähigen Flächen ermöglichen, wobei es sich bei den elektronisch leitfähigen Flächen um die elektronisch leitfähigen Elektrodenschichten 10 und um die elektronisch leitfähigen Bezirke 3 der Membraneinheiten handelt. Dabei wird das verwendete, elektrisch leitfähige Material 11 zwischen den zu verbindenen Bereichen auf die Membran aufgebracht. Es sind die unterschiedlichsten Verfahren zur Aufbringung des elektrisch leitfähigen Materials 11 auf die Membran möglich. Die prinzipielle Funktion der Streifen-Membran ist von der Art der Aufbringung unabhängig; die Technik der Aufbringung muß nur die elektrische Verbindung der gewünschten Bereiche gewährleisten.

So ist es beispielsweise möglich, Folien aus elektrisch leitfähigem Material 11 mit elektronisch leitfähigem Klebstoff auf die Membran aufzukleben. Ebenso kann die Verwendung thermoplastischer Polymere ein Verschweißen der Folien mit der Membran möglich machen. Die Verwendung löslicher Polymere macht über Anlösevorgänge der Membranoberfläche oder der leitfähigen Folien eine Verklebung möglich. Weiter können Polymerlösungen verwendet werden, die elektrisch leitfähige Partikel enthalten, wobei die Suspension auf die Membran gegeben wird und nach Verdunsten des Lösungsmittels die leitfähige Struktur entsteht.

Thermoplastische, zur Erzielung einer elektrischen Leitfähigkeit modifizierte Polymere, können auch im geschmolzenen Zustand auf die Membran gegeben und mit ihr verbunden werden. Ebenfalls möglich ist es, die elektrisch leitfähigen Schichten 11 durch Dünnschichtverfahren (wie z.B. Sputtern oder Plasmaprozesse) evtl. mit geeigneten Masken auf der Membran abzuscheiden.

Die elektronisch leitfähigen Verbindungen 11 können aus dem gleichen Material wie die Elektroden bestehen und gleichzeitig in einem Arbeitsgang mit ihnen auf die Membran aufgebracht werden, z.B. durch die bei der Aufbringung des Elektrodenmaterials beschriebenen Preßverfahren.

Figur 4 zeigt nun den Aufbau und die Verschaltung einer Streifenmembran, bei der die Elektrodenfläche 10 gleichzeitig die Aufgabe der elektronisch leitfähigen Bezirke übernimmt. Wesentlich ist dabei, daß die obere Elektrodenfläche 10 einer ersten Einzelzelle 13 direkt mit der unteren Elektrodenfläche 10 einer zweiten Einzelzelle 14 verbunden ist und damit eine elektrische Reihenschaltung der Einzelzellen vornimmt. Dieser Verbund muß elektronisch leitfähig und gasundurchlässig sein. Insbesondere die Ausführung der Streifenmembran, bei der die Elektrodenfläche 10 gleichzeitig die Aufgabe der elektronisch leitfähigen Bezirke übernimmt, wird aus separaten, fertigen Einzelflächen aufgebaut, wobei die Beschichtung der ionisch leitfähigen Bezirke mit Elektrodenmaterial vor dem Verbinden der Einzelstücke erfolgt. Die Verklebung oder Verschweißung der Einzelfächen muß elektronisch leitfähig sein.

Figur 5 zeigt nun den schematischen Aufbau einer eindimensionalen Streifenmembran 5. 7 symbolisiert dabei die in Figur 2a bzw. 2b beschriebenen Bezirke 1 bis 4. Diese Bezirke 1 bis 4, die mit 7 bezeichnet werden, werden nun wie in Figur 3 dargestellt, in Reihe verschaltet und so die eindimensionale Streifenmembran 5 gebildet. Diese Anordnung wird als eindimensionale Streifenmembran bezeichnet und kann an allen vier Seiten Randstreifen 8 aus elektronisch nicht leitfähigem Material besitzen. Figur 5 veranschaulicht den Aufbau am Beispiel einer eindimensionalen Streifenmembran, die aus 4 Grundeinheiten besteht.

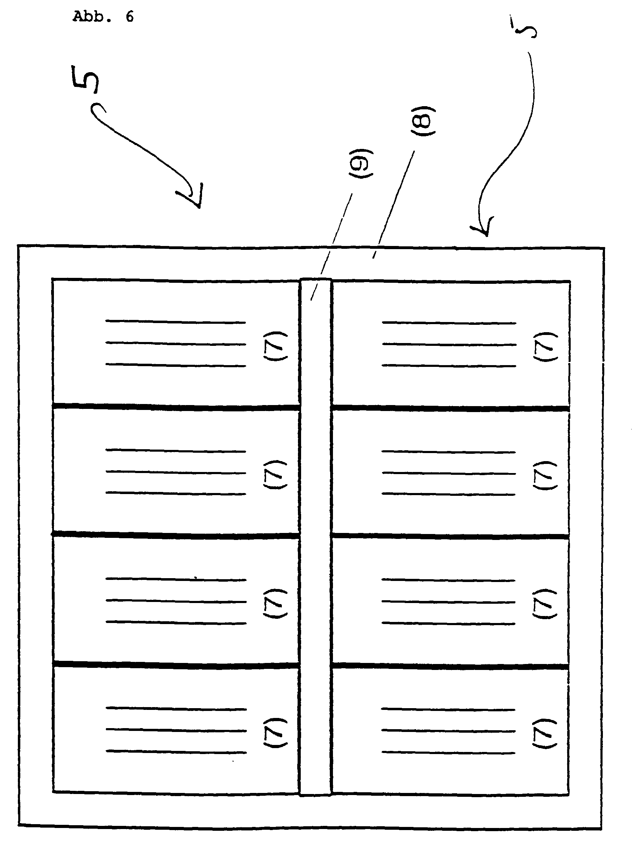

Figur 6 zeigt nun die Anordnung, bei der zwei eindimensionale Streifenmembranen 5 parallel geschaltet sind. Die einzelnen Streifenmembranen sind dabei durch Trennbezirke 9 aus elektronisch nicht leitfähigem Material miteinander verbunden. Diese Anordnung wird als zweidimensionale Streifenmembran bezeichnet und kann wiederum an allen vier Seiten Randstreifen 8 aus elektronisch nicht leitfähigem Material besitzen. Figur 6 veranschaulicht den Aufbau am Beispiel einer zweidimensionalen Streifenmembran, bestehend aus zwei eindimensionalen Streifenmembranen 5 mit jeweils vier Grundeinheiten.

## Patentansprüche

1. Elektrochemische Zelle mit polymeren Festelektrolyten,
dadurch **gekennzeichnet,**
daß ein Kernbereich vorgesehen ist, der aus mindestens einer Streifenmembran (5) besteht, wobei diese aus mindestens zwei, höchstens 10 000 flächigen Einzelzellen (6,12,13,14) jeweils aus einer beidseitig auf einer Membran (1) aus einem polymeren Festelektrolyten aufgebrachten Elektrodenschicht (10) besteht, und
daß die Einzelzellen (6,12,13,14) über eine diesen Einzelzellen entsprechende Anzahl flächiger elektronisch leitender Bezirke (3) oder treppenförmig unter teilweiser Überlappung ihrer Elektrodenschichten (10) in Reihe geschaltet sind, und
daß der Kernbereich mit einer geeigneten Peripherie in der Zelle angeordnet ist.

2. Elektrochemische Zelle nach Anspruch 1,
dadurch gekennzeichnet, daß der Kernbereich durch eine Streifenmembran (5) gebildet wird.

3. Elektrochemische Zelle nach Anspruch 1,
dadurch gekennzeichnet, daß der Kernbereich durch mindestens zwei, höchstens 50 Streifenmembranen (5), die jeweils parallel angeordnet und in Reihe geschaltet sind, gebildet wird ("zweidimensionale Streifenmembran").

4. Elektrochemische Zelle nach mindestens einem der Ansprüche 1 bis 3,
dadurch gekennzeichnet, daß der Kernbereich durch zwei bis 50 gegeneinander isolierte Streifenmembrane (5) gebildet wird, die parallel angeordnet und parallel geschaltet sind ("zweidimensionale Streifenmembran").

5. Elektrochemische Zelle nach mindestens einem der Ansprüche 1 bis 4,
dadurch gekennzeichnet, daß jeweils eine Elektrodenschicht (10) einer Einzelzelle (6) über einen flächigen elektronisch leitfähigen Bezirk (3) mit der auf der anderen Seite der Membran (1) angeordneten Elektrodenfläche (10) der nächsten Einzelzelle (12) verbunden ist.

6. Elektrochemische Zelle nach Anspruch 5,
dadurch gekennzeichnet, daß zwischen den flächigen Einzelzellen (6,12) und den flächigen elektronisch leitenden Bezirken (3) ein flächiger Isolationsbezirk (2,4) angeordnet ist.

7. Elektrochemische Zelle nach mindestens einem der Ansprüche 1 bis 6,
dadurch gekennzeichnet, daß die Membran (1) der Einzelzellen (6,12,13,14) ein kationenleitendes oder ein anionenleitendes Polymer ist.

8. Elektrochemische Zelle nach mindestens einem der Ansprüche 1 bis 7,
dadurch gekennzeichnet, daß die kationenleitenden Polymere ausgewählt sind aus der Gruppe der Verbindungen, die festgebundene Carbonsäure- und/oder Sulfonsäure- und/oder Phosphonsäuregruppen zur Erzielung einer Kationenleitfähigkeit in wäßriger Lösung enthalten, oder aus der Gruppe der Verbindungen, die chemische Gruppierungen enthalten, die anorganische Salze in nicht wäßriger Umgebung solvatisieren können, wie beispielsweise Polyethylenoxid-Einheiten.

9. Elektrochemische Zelle nach mindestens einem der Ansprüche 1 bis 8,
dadurch gekennzeichnet, daß die anionenleitenden Polymere ausgewählt sind aus der Gruppe der Verbindungen, die Aminofunktionen oder quartäre Ammoniumgruppierungen oder Pyridiniumgruppen zur Erzielung einer Anionenleitfähigkeit in wäßriger Lösung enthalten.

10. Elektrochemische Zelle nach mindestens einem der Anspruch 1 bis 9,
dadurch gekennzeichnet, daß für die Elektrodenbeschichtung (10) der Membran (1) der Einzelzellen (6,12,13,14) Metalle, Metalloxide, Mischoxide, Legierungen, Kohlenstoff, elektronisch leitfähige Polymere oder Mischungen davon eingesetzt werden.

11. Elektrochemische Zelle nach mindestens einem der Ansprüche 1 bis 10,
dadurch gekennzeichnet, daß die flächigen elektronisch leitenden Bezirke (3) aus elektronisch leitfähigen Polymeren, wie z.B. Polyacetylen, oder aus Polymeren bestehen, die zur Erzielung einer elektrischen Leitfähigkeit mit leitfähigen Substanzen, wie Leitfähigkeitsruß, Graphit, Kohlenstoff-Fasern, elektronisch leitfähige Polymerpartikel oder Fasern, Metallteilchen, Metallflocken oder Fasern oder metallischem Trägermaterial modifiziert sind.

## Claims

1. Electrochemical cell with solid polymer electrolytes,
characterised in that a central region is provided, which comprises at least one membrane strip (5), said strip consisting of at least two, at most 10 000, flat individual cells (6, 12, 13, 14), each comprising an electrode layer (10) applied on both sides of a membrane (1) made of a solid polymer electrolyte; and
that the individual cells (6, 12, 13, 14) are connected in series via a number of flat electronically conductive areas (3) corresponding to these individual cells or in a step-like manner with their electrode layers (10) partially overlapping; and that the central region is provided with an appropriate periphery in the cell.

2. Electrochemical cell according to Claim 1,
characterised in that the central region is formed by a membrane strip (5).

3. Electrochemical cell according to Claim 1,
characterised in that the central region is formed by at least two, at most 50, membrane strips (5), which are respectively arranged in parallel and connected in series ("two-dimensional membrane strip").

4. Electrochemical cell according to at least one of Claims 1 to 3, characterised in that the central region is formed by two to 50 membrane strips (5) insulated against one another, which are arranged in parallel and connected in parallel ("two-dimensional membrane strip").

5. Electrochemical cell according to at least one of Claims 1 to 4, characterised in that an electrode layer (10) of an individual cell (6) is respectively connected via a flat electronically conductive area (3) to the electrode surface (10) of the next individual cell (12) arranged on the other side of the membrane (1).

6. Electrochemical cell according to Claim 5,
characterised in that a flat insulation area (2, 4) is disposed between the flat individual cells (6, 12) and the flat electronically conductive areas (3).

7. Electrochemical cell according to at least one of Claims 1 to 6, characterised in that the membrane (1) of the individual cells (6, 12, 13, 14) is a cation-conducting or an anion-conducting polymer.

8. Electrochemical cell according to at least one of Claims 1 to 7, characterised in that the cation-conducting polymers are selected from the group of compounds including firmly bonded carboxylic acid and/or sulphonic acid and/or phosphonic acid groups to achieve a cation conductivity in an aqueous solution, or from the group of compounds including chemical groupings, which can solvate inorganic salts in a nonaqueous environment such as polyethylene oxide units, for example.

9. Electrochemical cell according to at least one of Claims 1 to 8, characterised in that the anion-conducting polymers are selected from the group of compounds including amino-functions or quaternary ammonium groupings or pyridine groups to achieve an anion conductivity in an aqueous solution.

10. Electrochemical cell according to at least one of Claims 1 to 9, characterised in that metals, metal oxides, mixed oxides, alloys, carbon, electronically conductive polymers or mixtures thereof are used for the electrode coating (10) of the membrane (1) of the individual cells (6, 12, 13, 14).

11. Electrochemical cell according to at least one of Claims 1 to 10, characterised in that the flat electronically conductive areas (3) are made of electronically conductive polymers such as polyacetylene, for example, or of polymers which are modified to achieve an electrical conductivity with conductive substances such as conductivity soot, graphite, carbon fibres, electronically conductive polymer particles or fibres, metal particles, metal flakes or fibres, or metal base material.

## Revendications

1. Cellule électrochimique à électrolyte polymère solide, caractérisée en ce qu 'elle comprend une zone noyau constituée d'au moins une membrane en forme de bande (5), laquelle est constituée d'au moins 2 et d'au plus 10 000 cellules unitaires planes (6, 12, 13, 14), chacune étant constituée d'une couche d'électrode (10) composée d'un électrolyte polymère solide déposé sur les deux côtés d'une membrane (1), et en ce que les cellules unitaires (6, 12, 13, 14) sont connectées en série par un nombre de zones électroconductrices planes (3) égal à celui de ces cellules unitaires, ou par recouvrement partiel de leurs couches d'électrode (10) disposées en forme d'escalier et en ce que la zone noyau est disposée dans la cellule avec une périphérie appropriée.

2. Cellule électrochimique selon la revendication 1, caractérisée en ce que la zone noyau est formée par une membrane en forme de bande (5).

3. Cellule électrochimique selon la revendication 1, caractérisée en ce que la zone noyau est formée par au moins 2 et au plus 50 membranes en forme de bandes (5) disposées parallèlement et connectées en série ("membrane en forme de bande bidimensionnelle").

4. Cellule électrochimique selon au moins une des revendications 1 à 3, caractérisée en ce que la zone noyau est formée par 2 à 50 membranes en forme de bande (5) isolées les unes par rapport aux autres, disposées parallèlement et connectées en parallèle ("membrane en forme de bande bidimensionnelle").

5. Cellule électrochimique selon au moins une des revendications 1 à 4, caractérisée en ce que chaque couche d'électrode (10) d'une cellule unitaire (6) est reliée par l'intermédiaire d'une zone électroconductrice plane (3) à la surface d'électrode (10) disposée sur l'autre côté de la membrane (1) de la cellule unitaire suivante (12).

6. Cellule électrochimique selon la revendication 5, caractérisée en ce que, entre les cellules unitaires planes (6, 12) et les zones électroconductrices planes (3) est disposée une zone d'isolation plane (2,4).

7. Cellule électrochimique selon au moins une des revendications 1 à 6, caractérisée en ce que la membrane (1) de la cellule unitaire (6, 12, 13, 14) est un polymère conducteur de cations ou conducteur d'anions.

8. Cellule électrochimique selon au moins une des revendications 1 à 7, caractérisée en ce que les polymères conducteurs de cations sont choisis parmi le groupe des composés qui comportent des groupes acide carboxylique et/ou acide sulfonique et/ou acide phosphonique pour obtenir une conductibilité cationique en solution aqueuse, ou bien parmi le groupe des composés qui comportent des groupements chimiques qui peuvent solvater des sels inorganiques dans un environnement non aqueux comme par exemple des unités poly(oxyde d'éthylène).

9. Cellule électrochimique selon au moins une des revendications 1 à 8, caractérisée en ce que les polymères conducteurs d'anions sont choisis parmi le groupe des composés qui portent des fonctions amino, des groupements ammonium quaternaire ou des groupes pyridinium pour obtenir une conductibilité anionique en solution aqueuse.

10. Cellule électrochimique selon au moins une des revendications 1 à 9, caractérisée en ce que pour les couches d'électrode (10) de la membrane (1) des cellules unitaires (6, 12, 13, 14), on utilise des métaux, des oxydes métalliques, des oxydes mixtes, des alliages, du carbone, des polymères électroconducteurs ou des mélanges de ceux-ci.

11. Cellule électrochimique selon au moins une des revendications 1 à 10, caractérisée en ce que les zones planes électroconductrices (3) sont composées de polymères électroconducteurs comme par exemple le polyacétylène, ou de polymères qui sont modifiés avec des substances conductrices telles que du noir de fumée confucteur, du graphite, des fibres de carbone, des particules ou des fibres de polymères électroconducteurs, des particules, flocons ou fibres métalliques ou un matériau de support métallisé, pour qu'ils présentent une conductibilité électrique.
